(19) Europäisches Patentamt
European Patent Office
Office européen des brevets

(11) **EP 3 849 877 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19753349.0**

(22) Anmeldetag: **13.08.2019**

(51) Internationale Patentklassifikation (IPC):
**B62D 15/02** *(2006.01)* **B60D 1/36** *(2006.01)*

(52) Gemeinsame Patentklassifikation (CPC):
**B62D 15/0285; B60D 1/36; B60D 1/62**

(86) Internationale Anmeldenummer:
**PCT/EP2019/071661**

(87) Internationale Veröffentlichungsnummer:
**WO 2020/052886 (19.03.2020 Gazette 2020/12)**

(54) **QUERLENKVERFAHREN UND QUERLENKVORRICHTUNG FÜR DAS BEWEGEN EINES FAHRZEUGS IN EINE ZIELPOSITION, UND FAHRZEUG DAFÜR**

TRANSVERSE STEERING METHOD AND TRANSVERSE STEERING DEVICE FOR MOVING A VEHICLE INTO A TARGET POSITION, AND VEHICLE FOR THIS PURPOSE

PROCÉDÉ DE DIRECTION TRANSVERSALE ET DISPOSITIF DE DIRECTION TRANSVERSALE POUR LE DÉPLACEMENT D'UN VÉHICULE DANS UNE POSITION CIBLE, ET VÉHICULE APPROPRIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2018 DE 102018122054**

(43) Veröffentlichungstag der Anmeldung:
**21.07.2021 Patentblatt 2021/29**

(73) Patentinhaber: **ZF CV Systems Europe BV**
**1170 Brussels (BE)**

(72) Erfinder: **WULF, Oliver**
**31535 Neustadt (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
**DE-A1-102010 004 920    DE-A1-102016 011 366**
**DE-A1-102016 212 195    DE-A1-102016 217 637**
**US-A1- 2013 211 656    US-A1- 2016 304 122**
**US-A1- 2018 086 336    US-A1- 2018 087 907**
**US-A1- 2018 095 103    US-A1- 2018 136 665**
**US-B2- 9 403 413**

**Beschreibung**

Die Erfindung betrifft ein Querlenkverfahren und eine Querlenkvorrichtung für das Bewegen eines angetriebenen Fahrzeugs an eine einen Zielort und eine Zielorientierung umfassende Zielposition, sowie ein dafür eingerichtetes Fahrzeug.

Die DE102010004920A1 offenbart ein Verfahren und eine Vorrichtung zur Unterstützung des Ankuppelns eines Anhängers an eine Anhängerkupplung eines Kraftfahrzeugs, wobei Einrichtungen zur Ermittlung der Relativposition einer Anhängerkupplung des Anhängers in Bezug zur Anhängerkupplung des Kraftfahrzeugs und zum Steuern der Bewegung des Kraftfahrzeugs und/oder einer Relativbewegung der Anhängerkupplungdes Kraftfahrzeugs in Bezug zum Kraftfahrzeug auf der Grundlage der sensorisch ermittelten Relativposition verwendet werden.

Die US2018095103A1 beschreibt eine Zustandsberechnungsvorrichtung umfassend einen Empfänger, der Azimute von Objekten um ein Fahrzeug herum und deren Relativgeschwindigkeiten zum Fahrzeug, erfasst durch einen ersten Sensor, der für das Fahrzeug verwendet wird, als Zielinformationen empfängt, und eine Geschwindigkeit und eine Fahrtrichtung des Fahrzeugs, erfasst durch einen zweiten Sensor, der an dem Fahrzeug installiert ist und eine Fehlervarianz als Zustandsinformationen aufweist, und eine Steuerung, die Geschwindigkeiten und Fahrtrichtungen des Fahrzeugs unter Verwendung der Zustandsinformationen und basierend auf einer Vielzahl der Azimute und einer Vielzahl der extrahierten Relativgeschwindigkeiten berechnet aus den Zielinformationen und das zumindest entweder eine Geschwindigkeit oder eine Fahrtrichtung des Fahrzeugs ausgibt, indem ein spezifiziertes Filter verwendet wird, um Mittelwerte und Fehlervarianzen in den berechneten Geschwindigkeiten und Fahrtrichtungen und zumindest entweder die Geschwindigkeit oder die erfasste Fahrtrichtung zu filtern durch den zweiten Sensor.

Die DE102016011366A1 beschreibt ein Verfahren zur Positionsbestimmung eines Fahrzeugs. Erfindungsgemäß werden zur Positionsbestimmung erweiterte Kalman-Filter und ein diskretes Bayesfilter kombiniert, wobei eine jeweilige Hypothese bezüglich einer Absolutposition des Fahrzeugs in der Welt und einer Position des Fahrzeugs innerhalb eines jeweiligen Fahrstreifens einer Fahrbahn erstellt wird und die erstellten Hypothesen anhand von Messwerten von Fahrzeugsensoren mittels einer Mehrzahl von erweiterten Kalman-Filtern verfolgt werden und wobei mittels des diskreten Bayesfilters aus den von den erweiterten Kalman-Filtern verfolgten Hypothesen die wahrscheinlichste Hypothese bestimmt wird.

Aus der DE 10 2016 011 324 A1 ist ein Verfahren zur Steuerung eines Zugfahrzeugs bei dessen Heranfahren und Ankuppeln an ein Anhängerfahrzeug bekannt. Der rückwärtige Umfeldbereich hinter dem Zugfahrzeug wird, zum Beispiel mit einer Kamera, erfasst; aus den erfassten Daten werden eine Versatzstrecke und ein Versatzwinkel zwischen dem Zugfahrzeug und dem Anhängerfahrzeug ausgewertet; mindestens eine Fahrtrajektorie mittels derer das Zugfahrzeug autonom zu einem Ankuppelort fahrbar ist wird berechnet, und das Zugfahrzeug wird gemäß der Fahrtrajektorie autonom herangefahren und angekuppelt. Bei dem Verfahren des Standes der Technik kann als nachteilig angesehen werden, dass eine zu Beginn des Bewegungsvorgangs berechnete Fahrtrajektorie deutlich fehlerhaft sein kann, weil typischerweise die Startposition dann nur ungenau bekannt ist. Insbesondere Fehler einer gemessenen Startorientierung führen insbesondere bei großem zu durchfahrenden Abstand zu einem großen seitlichen Versatz. Ebenfalls als nachteilig kann angesehen werden, dass Messwerte der Positionsmessung typischerweise verrauscht sind, mit anderen Worten Fehleranteile enthalten. Der Erfindung liegt die Aufgabe zugrunde, Querlenkverfahren und Querlenkvorrichtungen zum Bewegen eines Fahrzeugs in eine Zielposition bereitzustellen, bei denen diese Nachteile vermieden werden. Ebenso sollen Fahrzeuge bereitgestellt werden, die eingerichtet sind, diese Querlenkverfahren durchzuführen. Diese Aufgabe wird von einem Verfahren gemäß Anspruch 1, von einer Vorrichtung gemäß Anspruch 5 und von einem Fahrzeug gemäß Anspruch 9 gelöst.

Querlenkverfahren für das Bewegen eines Fahrzeugs in eine Zielposition umfassen gemäß der Erfindung:

- dass zwischen dem Fahrzeug und der Zielposition Abstands- und/oder Winkelmessungen durchgeführt werden, die eine Herleitung von Orts- und Orientierungsdaten ermöglichen,
- dass die hergeleiteten Orts- und Orientierungsdaten zu Aktuellwerten gefiltert werden, welche aktuelle Ortswerte und aktuelle Orientierungswerte umfassen,
- dass eine Regelung durchgeführt wird, die aus den Aktuellwerten Solllenkwinkel herleitet,
- und dass die Solllenkwinkel durch Einwirkung auf eine aktive Lenkung des Fahrzeugs realisiert werden.

In einer vorteilhaften Weiterbildung umfassen die Querlenkverfahren gemäß der Erfindung, dass das Filtern der Orts- und Orientierungsdaten als Kalmanfilterung ausgebildet ist, bei der die Orts- und Orientierungsdaten unter Berücksichtigung von am Fahrzeug gemessenen Fahrteigenschaften, Gütewerten und einem Bewegungsmodell des Fahrzeugs zu den Aktuellwerten aufbereitet werden.

In einer weiteren vorteilhaften Weiterbildung umfassen die Querlenkverfahren gemäß der Erfindung, dass die Regelung als Kaskadenregelung ausgebildet ist, bei der in einem äußeren Regelkreis aus den aktuellen Ortswerten eine Sollorientierung hergeleitet wird, und in einem inneren Regelkreis aus der Sollorientierung und dem aktuellen Orientierungswert der Solllenkwinkel hergeleitet wird.

In einer weiteren vorteilhaften Weiterbildung umfassen die Querlenkverfahren gemäß der Erfindung, dass die Kalmanfilterung einen Messschritt und einen Updateschritt umfasst, derart dass im Messschritt aus jeweils neuesten Orts- und Orientierungsdaten und vorherigen berechneten Positionsdaten durch gewichtete Mittelung mit einem Gewicht das von der Güte der Sensormessungen und einer Varianz der Sensormessungen abhängt, neue berechnete Positionsdaten hergeleitet werden,
und dass im Updateschritt die berechneten Positionsdaten gemäß einem mit einem gemessenen Lenkwinkel und einer gemessenen Geschwindigkeit als Fahrteigenschaften parametrierten Bewegungsmodell in aktuelle Positionsdaten extrapoliert werden.

In einer weiteren vorteilhaften Weiterbildung umfassen die Querlenkverfahren gemäß der Erfindung, dass der Messschritt beim Vorliegen der jeweils neuen Orts- und Orientierungsdaten aktiviert wird, und der Updateschritt beim Vorliegen der jeweils neuen Fahrteigenschaften aktiviert wird.

In einer weiteren vorteilhaften Weiterbildung umfassen die Querlenkverfahren gemäß der Erfindung, dass nach dem Messschritt aus jedem alten Gütewert $q_{alt}$, einem zugeordneten Mindestgütewert $q_{min}$ und einem zugeordneten Messgütewert $q_{mess}$ ein neuer Gütewert $q_{neu}$ bestimmt wird gemäß

$$q_{neu} = \max\left(q_{min},\, q_{alt}/(q_{alt}+q_{mess})\right),$$

wobei $q_{min}$ und $q_{mess}$ separat für Ortsdaten und Orientierungsdaten fest angenommen werden,
und dass nach dem Updateschritt aus jedem alten Gütewert $q_{alt}$, einer zugeordneten Proportionalitätskonstante $C_p$, der Geschwindigkeit $v$ und der Zeit $t_{ms}$ seit dem letzten Messschritt ein neuer Gütewert $q_{neu}$ bestimmt wird gemäß

$$q_{neu} = q_{alt} + C_p \cdot v \cdot t_{MS},$$

wobei $C_p$ separat für Ortsdaten und Orientierungsdaten fest angenommen wird.

Querlenkvorrichtungen für das Bewegen eines eine aktive Lenkung umfassenden Fahrzeugs in eine Zielposition umfassen gemäß der Erfindung:

- Sensoren und Markierungen, die so beschaffen und auf das Fahrzeug und die Zielposition verteilt sind, dass aus Abstands- und/oder Winkelmessungen zwischen dem Fahrzeug und der Zielposition Orts- und Orientierungsdaten hergeleitet werden können,
- eine Messvorrichtung, die so eingerichtet ist, dass sie mittels der Sensoren und Markierungen die Abstands- und/oder Winkelmessungen zwischen dem Fahrzeug und der Zielposition durchführt, und daraus die Orts- und Orientierungsdaten des Fahrzeugs herleitet,
- ein Messwertefilter, das so eingerichtet ist, dass es aus den Orts- und Orientierungsdaten Aktuellwerte herleitet, welche aktuelle Ortswerte und aktuelle Orientierungswerte umfassen,
- einen Regler, der so eingerichtet ist, dass aus den Aktuellwerten Solllenkwinkel hergeleitet und durch Einwirkung auf die aktive Lenkung realisiert werden.

In einer vorteilhaften Weiterbildung umfassen die Querlenkvorrichtungen gemäß der Erfindung, dass das Messwertefilter als Kalmanfilter ausgebildet ist, so eingerichtet, dass die Orts- und Orientierungsdaten unter Berücksichtigung von im Fahrzeug gemessenen Fahrteigenschaften, Gütewerten und einem Bewegungsmodell des Fahrzeugs zu den Aktuellwerten aufbereitet werden.

In einer weiteren vorteilhaften Weiterbildung umfassen die Querlenkvorrichtungen gemäß der Erfindung, dass der Regler als Kaskadenregler ausgebildet ist, mit einem Querversatzregler eingerichtet um aus den aktuellen Ortswerten eine Sollorientierung herzuleiten, und einem Orientierungsregler eingerichtet um aus der Sollorientierung und dem aktuellen Orientierungswert den Solllenkwinkel herzuleiten.

In einer weiteren vorteilhaften Weiterbildung umfassen die Querlenkvorrichtungen gemäß der Erfindung, dass das Kalmanfilter eingerichtet ist, einen Messschritt und einen Updateschritt durchzuführen, derart dass im Messschritt aus jeweils neuesten Orts- und Orientierungsdaten und vorherigen berechneten Positionsdaten durch gewichtete Mittelung mit einem Gewicht das von der Güte der Sensormessungen und einer Varianz der Sensormessungen abhängt, neue berechnete Positionsdaten hergeleitet werden, und im Updateschritt die berechneten Positionsdaten gemäß einem mit einem gemessenen Lenkwinkel und einer gemessenen Geschwindigkeit als Fahrteigenschaften parametrierten Bewegungsmodell in aktuelle Positionsdaten extrapoliert werden.

In einer weiteren vorteilhaften Weiterbildung umfassen die Querlenkvorrichtungen gemäß der Erfindung, dass das Kalmanfilter eingerichtet ist, den Messschritt beim Vorliegen der jeweils neuen Orts- und Orientierungsdaten zu aktivieren, und den Updateschritt beim Vorliegen der jeweils neuen Fahrteigenschaften zu aktivieren.

In einer weiteren vorteilhaften Weiterbildung umfassen die Querlenkvorrichtungen gemäß der Erfindung, dass das Kalmanfilter eingerichtet ist, nach dem Messschritt aus jedem alten Gütewert $q_{alt}$. einem zugeordneten Mindestgütewert $q_{min}$ und einem zugeordneten Messgütewert $q_{mess}$ einen neuen Gütewert $q_{neu}$ zu bestimmen gemäß

$$q_{neu} = \max\,(q_{min},\, q_{alt}/(q_{alt}+q_{mess})),$$

wobei $q_{min}$ und $q_{mess}$ separat für Ortsdaten und Orientierungsdaten fest angenommen sind,
und nach dem Updateschritt aus jedem alten Gütewert $q_{alt}$, einer zugeordneten Proportionalitätskonstante $C_p$, der Geschwindigkeit v und der Zeit $t_{MS}$ seit dem letzten Messschritt einen neuen Gütewert $q_{neu}$ zu bestimmen gemäß

$$q_{neu} = q_{alt} + C_p \cdot v \cdot t_{MS},$$

wobei $C_p$ separat für Ortsdaten und Orientierungsdaten fest angenommen wird.

Ein Fahrzeug gemäß der Erfindung, insbesondere ein angetriebenes Zugfahrzeug ist eingerichtet, ein Querlenkverfahren gemäß der Erfindung durchzuführen, und/oder weist eine Querlenkvorrichtung gemäß der Erfindung auf.

Vorteilhafte Ausführungsformen der Erfindung ergeben sich aus den Ansprüchen sowie aus den anhand der Zeichnungen näher erläuterten Ausführungsbeispielen. In den Zeichnungen zeigen:

Fig. 1     schematisch in Seitenansicht einen Anwendungsfall, wo die Zielposition eine Ankuppelposition ist,
Fig. 2     schematisch in Draufsicht die hier verwendeten geometrischen Beziehungen, Definitionen und Größen am Beispiel eines Sattelschleppers vor einem Auflieger,
Fig. 3     ein Blockdiagramm zur Erläuterung eines ersten Querlenkverfahrens gemäß der Erfindung,
Fig. 4     ein Blockdiagramm zur Erläuterung eines zweiten Querlenkverfahrens gemäß der Erfindung,
Fig. 5     ein Blockdiagramm zur Erläuterung eines dritten Querlenkverfahrens gemäß der Erfindung,
Fig. 6     ein Blockdiagramm zur Erläuterung eines vierten Querlenkverfahrens gemäß der Erfindung.

Position, wie bei Zielposition, wird hier verstanden als jeweils eine Ortsangabe und eine Orientierungsangabe umfassend. Die Ortsangabe kann zum Beispiel durch Koordinaten in einem zwei- oder dreidimensionalen Koordinatensystem, absolut oder relativ, erfolgen. Die Orientierungsangabe kann durch eine zwei- oder dreidimensionale Winkelangabe zusammen mit einer Vereinbarung über den Bezugspunkt und den Bezugswinkel erfolgen.

Querlenkung bezeichnet hier eine Einwirkung auf die Winkel der Räder der Lenkachse des Fahrzeugs. Bei Fahrzeugen mit mehreren gelenkten Achsen kann dies auch eine angemessene Einwirkung auf andere Achsen als die Hauptlenkachse umfassen.

Die Zielposition kann eine Ankuppelposition sein, d.h. eine Position im Sinne von Ort und Orientierung, an der das Fahrzeug an ein Anhänger- oder Aufliegerfahrzeug angekuppelt werden kann.

Die Zielposition kann auch eine Beladungsposition sein, d.h. eine Position an einer Laderampe die es ermöglicht, das Fahrzeug zu be- oder entladen. Die x-Achse des bezüglich der Zielposition ortsfesten Koordinatensystems legt man hier bevorzugt in die Richtung, in der man an die Beladungsposition heranfahren muss, zum Beispiel rechtwinklig zu einer Kante einer Laderampe.

Die Zielposition kann auch eine Aufladeposition sein, d.h. eine Position an der dem Fahrzeug durch Anschluss an eine Versorgungseinrichtung Betriebsmittel wie zum Beispiel Treibstoff, Batterieladung oder Hydraulikflüssigkeit zugeführt werden können. Die x-Achse des bezüglich der Zielposition ortsfesten Koordinatensystems legt man hier bevorzugt in die Richtung, in der man an die Aufladeposition heranfahren muss, zum Beispiel in geeignetem Abstand längs neben die Versorgungseinrichtung.

Die Zielposition kann auch eine Parkposition in einem für Teilautomatisierung vorbereiteten Fahrzeugabstellplatz sein. Die x-Achse des bezüglich der Zielposition ortsfesten Koordinatensystems legt man hier bevorzugt in die Richtung, in der man in die Parkposition einfahren muss.

Der Sensor des Fahrzeugs kann zum Beispiel ein Laserscanner oder ein LIDAR, eine Standbildkamera, oder eine Videokamera sein.

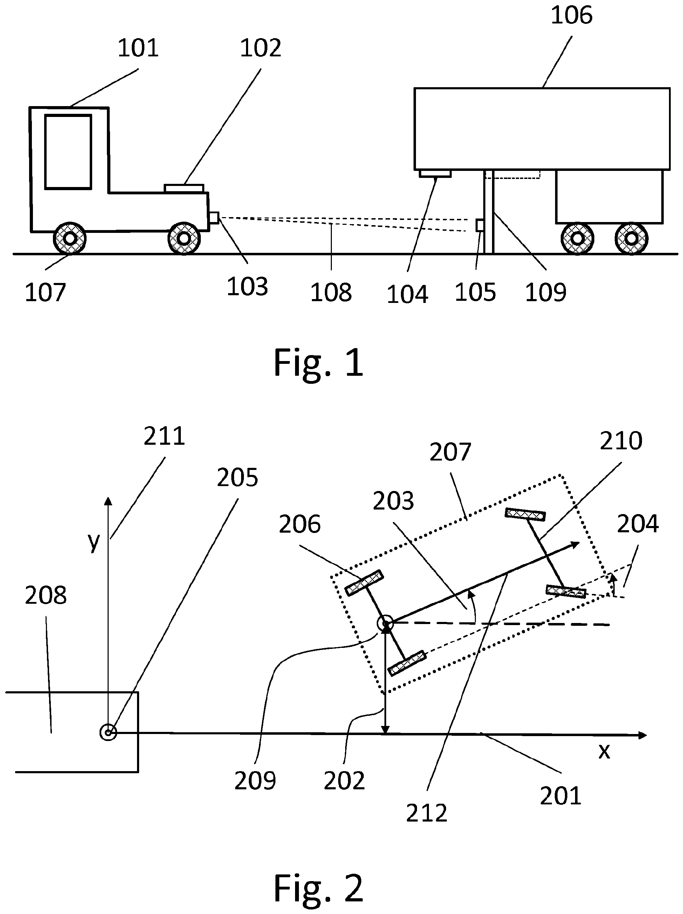

Fig. 1 zeigt schematisch in Seitenansicht einen Anwendungsfall, wo die Zielposition eine Ankuppelposition ist. Das Fahrzeug ist hier ein Sattelschlepper 101 und umfasst eine aktive Lenkung 107, zwei waagerecht quer zur Längsachse beabstandete Sensoren 103 und eine Sattelplatte 102. Der Sattelschlepper 101 steht mit Abstand vor einem Auflieger 106, der einen Sattelzapfen 104 sowie einklappbare Stützen 109 umfasst. Ein Erreichen der Zielposition ist hier dann gegeben, wenn die Sattelplatte 102 in Draufsicht mittig unter dem Sattelzapfen 104 positioniert wurde. Die Stützen 109 umfassen Reflektoren 105, die so beschaffen und angebracht sind, dass sie durch Messung 108 von den Sensoren 103 hinsichtlich ihrer Richtung und/oder ihres Abstandes sensiert werden können.

Fig. 2 zeigt schematisch in Draufsicht die hier verwendeten geometrischen Beziehungen, Definitionen und Größen am Beispiel eines Sattelschleppers 207 als Fahrzeug vor einem teilweise angedeuteten unbewegten Auflieger 208 mit einem Sattelzapfen 205. Im als Zielort angenommenen Sattelzapfen 205 liegt der Ursprung eines ortsfesten rechtwinkligen Koordinatensystems aus x-Richtung 201 und y-Richtung 211. Die x-Richtung entspricht dabei der Längsachse des Aufliegers 208. Der Sattelschlepper 207 umfasst eine ungelenkte Hinterachse 206 und eine gelenkte Vorderachse 210 und hat einen Bezugspunkt 209, eine Position, eine Orientierung, einen Lenkwinkel beta 204 und eine Längsachse 212. Als Bezugspunkt 209 für die Beschreibung des Sattelschleppers 207 wird hier die Mitte seiner Sattelplatte 102 verwendet. Die Position des Sattelschleppers 207 ist definiert durch die x-Koordinate und die y-Koordinate dieses Bezugspunkts 209. Speziell die y-Koordinate des Bezugspunkts 209 wird auch als Querversatz 202 bezeichnet. Die Orientierung des Sattelschleppers 207 ist definiert als der Winkel alpha 203, den die Längsachse 212 des Sattelschleppers 207 mit der x-Richtung 201 einschließt. Der Lenkwinkel beta 204 des Sattelschleppers 207 ist definiert als der Winkel, den die Räder der Vorderachse 210 mit einer Parallele zu der Längsachse 212 des Sattelschleppers 207 einschließen.

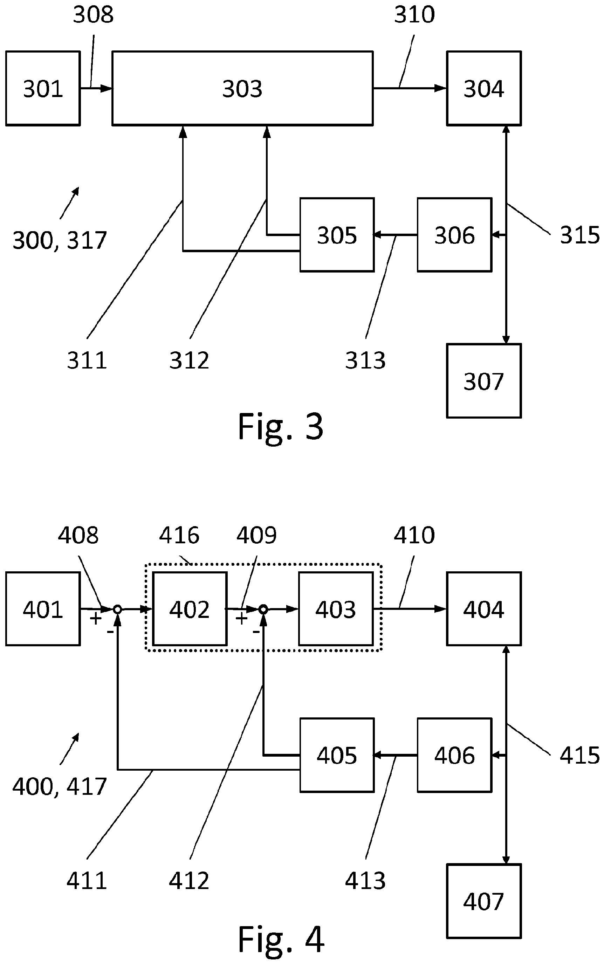

Fig. 3 zeigt ein Blockdiagramm zur Erläuterung eines ersten Querlenkverfahrens 300 und einer ersten Querlenkvorrichtung 317 gemäß der Erfindung. Am Querlenkverfahren 300 beteiligt sind eine Sollversatzvorgabe 301, ein auf ein Fahrzeug 304 einwirkender Regler 303, eine Messvorrichtung 306, und ein Messwertefilter 305.

Der Regler 303 erhält von der Sollversatzvorgabe 301 einen Soll-Querversatz oder Sollversatz 308, sowie vom Messwertefilter 305 Werte für einen aktuellen Querversatz 311 und eine aktuelle Orientierung 312 des Fahrzeugs 304. Aus diesen Eingangsdaten leitet der Regler 303 einen Solllenkwinkel 310 her, der dann im Fahrzeug 304 durch Einwirkung auf die aktive Lenkung 107 realisiert wird. Der Sollversatz 308, d.h. der am Ende der Bewegung anzustrebende Querversatz 202 ist in den meisten praktischen Fällen gleich Null, in Sonderfällen können davon abweichende Werte zweckmäßig sein. Die Messvorrichtung 306 führt Abstands- und/oder Winkelmessungen zwischen dem Fahrzeug 304 und einer Zielposition 307 durch, die so gestaltet sind, dass daraus Orts- und Orientierungsdaten 313 des Fahrzeugs 304 hergeleitet werden können, und leitet diese her. Das Messwertefilter 305 verarbeitet die Orts- und Orientierungsdaten 313 und leitet daraus Werte für den aktuellen Querversatz 311 und die aktuelle Orientierung 312 des Fahrzeugs 304 her.

Für die von der Messvorrichtung 306 zwischen dem Fahrzeug 304 und der Zielposition 307 durchzuführenden Messungen 315 wirken Sensoren und detektierbare Markierungen zusammen, die auf unterschiedliche Weise angeordnet sein können. Beispielsweise können wie in dem in Fig. 1 gezeigten Anwendungsfall die Sensoren 103 fest am Fahrzeug 101, 304 und die Markierungen 105 fest in bekanntem Abstand zur Zielposition 104 angeordnet sein. Vorteilhaft hierbei ist, dass die Sensorsignale bereits im Fahrzeug 101, 304 vorliegen und nicht erst noch dorthin übertragen werden müssen.

Die umgekehrte Anordnung, d.h. Sensoren fest in bekanntem Abstand zur Zielposition und Markierungen fest am Fahrzeug 304 ist alternativ verwendbar. Vorteilhaft hierbei wäre, dass die Messungen der Sensoren direkt in einem Koordinatensystem relativ zur Zielposition erstellt würden und folglich nicht noch umgerechnet werden müssten.

Die Anzahl der Sensoren und der Markierungen sowie die Art der durchzuführenden Messungen, zum Beispiel Winkelmessung oder Abstandsmessung, richten sich nach den bekannten Prinzipien der Triangulation. Eine mögliche Konfiguration umfasst zwei beabstandete Sensoren am Fahrzeug und zwei beabstandete Markierungen fest in bekanntem Abstand zur Zielposition. Für jede einzelne Markierung reichen dann je eine Abstands- oder Winkelmessung von jedem der Sensoren aus, um den Ort der Markierung relativ zum Ort der Sensoren zu bestimmen. Aus den Orten der beiden Markierungen lässt sich dann zusätzlich die relative Orientierung zwischen Fahrzeug und Zielposition herleiten.

Die relativ zu einem ersten Koordinatensystem bestimmten Orts- und Orientierungswerte lassen sich mit bekannten Gleichungen in jedes andere verschobene und/oder gedrehte Koordinatensystem umrechnen.

Zur Verringerung von Messungenauigkeiten oder zur Erhöhung der Systemverfügbarkeit kann es zweckmäßig sein, darüber hinaus weitere zusätzliche Sensoren und/oder weitere zusätzliche Markierungen zu verwenden.

Fig. 4 zeigt ein Blockdiagramm zur Erläuterung eines zweiten Querlenkverfahrens 400 und einer zweiten Querlenkvorrichtung 417 gemäß der Erfindung. Am Querlenkverfahren 400 beteiligt sind eine Sollversatzvorgabe 401, ein Querversatzregler 402, ein auf ein Fahrzeug 404 einwirkender Orientierungsregler 403, eine Messvorrichtung 406, und ein Messwertefilter 405. Der Querversatzregler 402 und der Orientierungsregler 403 bilden zusammen einen Kaskadenregler 416.

Der Querversatzregler 402 erhält als Eingangsgröße den von der Sollversatzvorgabe 401 gelieferten Soll-Querversatz oder Sollversatz 408 abzüglich des vom Messwertefilter 405 gelieferten aktuellen Querversatzes 411, woraus der Querversatzregler 402 eine Sollorientierung 409 herleitet. Der Orientierungsregler 403 erhält als Eingangsgröße die Sollorientierung 409 abzüglich der vom Messwertefilter 405 gelieferten aktuellen Orientierung 412, woraus der Orientierungsregler 403 einen Solllenkwinkel 410 herleitet, der dann im Fahrzeug 404 durch Einwirkung auf die aktive Lenkung 107 realisiert wird.

Für den Sollversatz 408, die Messvorrichtung 406, die Orts- und Orientierungsdaten 413 und das Messwertefilter 405, sowie für die Sensoren und Markierungen gilt sinngemäß das oben zum ersten Querlenkverfahren 300 Gesagte.

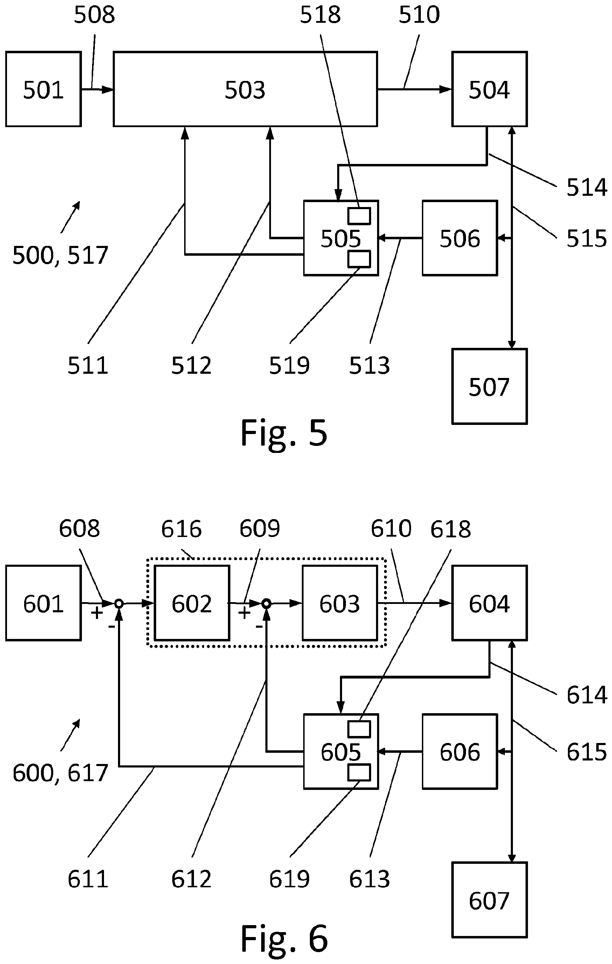

Fig. 5 zeigt ein Blockdiagramm zur Erläuterung eines dritten Querlenkverfahrens 500 und einer dritten Querlenkvorrichtung 517 gemäß der Erfindung. Am Querlenkverfahren 500 beteiligt sind eine Sollversatzvorgabe 501, ein auf ein Fahrzeug 504 einwirkender Regler 503, eine Messvorrichtung 506, und ein Messwertefilter 505. Für die Sollversatzvorgabe 501, den Regler 503, den Solllenkwinkel 510 und die Messvorrichtung 506 gilt sinngemäß das oben zum ersten Querlenkverfahren 300 Gesagte. Das Messwertefilter 505 ist hier ein Kalmanfilter, das nicht nur die Orts- und Orientierungsdaten 513 von der Messvorrichtung 506, sondern zusätzlich eine gemessene Geschwindigkeit und einen gemessenen Lenkwinkel als Fahrteigenschaften 514 vom Fahrzeug 504 erhält. Das Kalmanfilter umfasst ein Bewegungsmodell 518 des Fahrzeugs 504, und berechnet mithilfe des Bewegungsmodells 518 aus den Orts- und Orientierungsdaten 513 sowie den Fahrteigenschaften 514 den aktuellen Querversatz 511 und die aktuelle Orientierung 512.

Fig. 6 zeigt ein Blockdiagramm zur Erläuterung eines vierten Querlenkverfahrens 600 und einer vierten Querlenkvorrichtung 617 gemäß der Erfindung. Am Querlenkverfahren 600 beteiligt sind eine Sollversatzvorgabe 601, ein Querversatzregler 602, ein auf ein Fahrzeug 604 einwirkender Orientierungsregler 603, eine Messvorrichtung 606, und ein Messwertefilter 605. Für den Querversatzregler 602 und den Orientierungsregler 603 gilt sinngemäß das oben zum zweiten Querlenkverfahren 400 Gesagte, sie bilden zusammen einen Kaskadenregler 616. Für das Messwertefilter 605 in Form eines Kalmanfilters gilt sinngemäß das oben zum dritten Querlenkverfahren 500 Gesagte.

Die hier verwendete Kalmanfilterung besteht aus zwei Verarbeitungsschritten, einem sogenannten "Messschritt" und einem sogenannten "Updateschritt".

Die in dieser Anwendung des Kalmanfilters zu verarbeitenden Größen sind berechnete Positionsdaten bestehend aus berechneten Ortsdaten $x_k$ und $y_k$ sowie einem berechneten Orientierungsdatum $alpha_k$. Der Suffix deutet hierbei an, dass es sich bei diesen Daten um zeitlich diskrete Folgen handelt. "k" steht dabei für einen jeweils aktuellsten Wert, entsprechend steht "k-1" für einen zeitlich vorhergehenden Wert. Die berechneten Positionsdaten werden im Kalmanfilter rekursiv verarbeitet. Das Kalmanfilter empfängt durch die Messungen mit den Sensoren und den Markierungen hergeleitete Orts- und Orientierungsdaten, die Ortsdaten $x_s$, $y_s$ und ein Orientierungsdatum $alpha_s$ umfassen.

Zusätzlich verarbeitet das bekannte Kalmanfilter intern noch sogenannte Gütewerte zu jeder der zu verarbeitenden Größen.

Da die Kalmanfilterung konzeptuell ein rekursives Verfahren ist, müssen alle beteiligten Größen geeignet initialisiert werden. Zur Initialisierung der Orts- und Orientierungsdaten können zum Beispiel die ersten Messwerte, oder geeignete typische Werte verwendet werden. Zur Initialisierung der Gütewerte können zum Beispiel geeignete typische Werte verwendet werden.

Im Messschritt der hier vorliegenden Anwendungen werden aus den jeweils neuesten Orts- und Orientierungsdaten $x_s$, $y_s$, $alpha_s$, und den vorherigen berechneten Positionsdaten $x_{k-1}$, $y_{k-1}$; $alpha_{k-1}$ durch gewichtete Mittelung neue berechnete Positionsdaten $x_k$, $y_k$, $alpha_k$ hergeleitet gemäß

$$x_k = (1\text{-}w) \cdot x_{k-1} + w \cdot x_s = x_{k-1} + w \cdot (x_s\text{-}x_{k-1})$$

$$y_k = (1\text{-}w) \cdot y_{k-1} + w \cdot y_s = y_{k-1} + w \cdot (y_s\text{-}y_{k-1})$$

$$alpha_k = (1\text{-}w) \cdot alpha_{k-1} + w \cdot alpha_s = alpha_{k-1} + w \cdot (alpha_s\text{-}alpha_{k-1}).$$

Hierbei leitet sich das Gewicht w, das immer aus dem Bereich 0 bis 1 ist, aus der Güte der Sensormessungen q und einer Varianz der Sensormessungen vm her gemäß

$$w = 1 / (q \cdot vm + 1).$$

Bei hohen Gütewerten q geht w also gegen 0 und die aus den Sensormessungen hergeleiteten Orts- und Orientierungsdaten gehen kaum noch ein. Bei niedrigen Gütewerten q geht w gegen 1, d.h. das gewichtete Mittel entspricht weitgehend den Orts- und Orientierungsdaten.

Die Varianz vm der Sensormessungen kann zum Beispiel vorteilhaft für Ortsdaten als 0,5m und für Orientierungsdaten als 5° angenommen werden.

Der Messschritt wird bevorzugt immer dann durchgeführt, wenn neue Orts- und Orientierungsdaten vorliegen bzw. eintreffen.

Nach jedem Messschritt wird der Gütewert q verringert. Dies geschieht vorteilhaft gemäß

$$q_{neu} = \max{(q_{min}, q_{alt}/(q_{alt}+q_{mess}))}.$$

$q_{min}$ und $q_{mess}$ können dabei - separat für die Gütewerte von Ortsdaten bzw. von Orientierungsdaten - fest vorgegeben werden. Für Ortsdaten ist $q_{min}$ = 0,1m und $q_{mess}$ = 0,5m vorteilhaft, für Orientierungsdaten ist $q_{min}$ = 2° und $q_{mess}$ = 5° vorteilhaft.

Im Updateschritt findet die Fusionierung der berechneten Positionsdaten mit den am Fahrzeug gemessenen inkrementellen Fahrteigenschaften statt. Die Fahrteigenschaften umfassen eine gemessene Geschwindigkeit $v_{ist}$ und einen gemessenen Lenkwinkel $beta_{ist}$.

Im Updateschritt der hier vorliegenden Anwendungen werden die berechneten Positionsdaten $x_{alt}$ $y_{alt}$, $alpha_{alt}$ gemäß dem Bewegungsmodell 518 des Fahrzeugs in aktuelle Positionsdaten extrapoliert gemäß

$$x_{neu} = x_{alt} + v_{ist}{\cdot}dt{\cdot}\cos(alpha_{alt}),$$

$$y_{neu} = y_{alt} + v_{ist}{\cdot}dt{\cdot}\sin(alpha_{alt})$$

und

$$alpha_{neu} = alpha_{alt} + v_{ist}{\cdot}dt{\cdot}\tan(beta_{ist})/z.$$

Hierbei stellen die Fahrteigenschaften gemessener Lenkwinkel $beta_{ist}$ und gemessene Geschwindigkeit $v_{ist}$ die Parameter des Bewegungsmodells 518 dar, und z ist der Radstand, entspricht also dem Abstand der Vorderräder von den Hinterrädern. Der Term "/z" beschreibt also anschaulich, dass über dasselbe Zeitintervall dt bei derselben Geschwindigkeit $v_{ist}$, derselbe Lenkwinkel $beta_{ist}$ bei kurzen Fahrzeugen eine stärkere Drehung $alpha_{neu}$-$alpha_{alt}$ bewirkt als bei längeren Fahrzeugen.

Der Updateschritt wird bevorzugt immer dann durchgeführt, wenn neue Fahrteigenschaften $beta_{ist}$, $v_{ist}$ vorliegen bzw. von der Messung am Fahrzeug eintreffen. Diese Zeitpunkte sind im Allgemeinen nicht synchron mit den aus der Sensormessung eintreffenden neuen Orts- und Orientierungsdaten. Typischerweise liegen neue Fahrteigenschaften deutlich öfter vor als neue Orts- und Orientierungsdaten.

Nach jedem Updateschritt wird der Gütewert q erhöht. Dies geschieht vorteilhaft gemäß

$$q_{neu} = q_{alt} + C_p{\cdot}v{\cdot}t_{MS},$$

Hierbei ist $C_p$ eine jeweils zugeordnete Proportionalitätskonstante, v die Geschwindigkeit und $t_{MS}$ die Zeit seit dem letzten Messschritt wobei $C_p$ separat für die Gütewerte von Ortsdaten bzw. Orientierungsdaten fest angenommen wird. Für Ortsdaten ist $C_p$ = 0,1 vorteilhaft, für Orientierungsdaten ist Cp = 2 °/m vorteilhaft.

Eine zusätzliche Einflussgröße bei allen Querlenkverfahren 300, 400, 500, 600 ist die Längssteuerung, d.h. die Einwirkung auf Antriebsstrang und Bremssystem des Fahrzeugs. Diese bewirkt den Verlauf der Fahrzeuggeschwindigkeit über der Zeit und kann vollkommen unabhängig vorgegeben werden, zum Beispiel automatisch, teilautomatisch, manuell per Fernsteuerung von einem abgesessenen Fahrzeugführer oder manuell von einem im Fahrzeug befindlichen Fahrzeugführer. Die Wirkung der Längssteuerung schlägt sich zum einen in den über der Zeit sich ändernden Ortsdaten nieder, zum anderen aber auch in den eine gemessene Geschwindigkeit umfassenden Fahrteigenschaften 514, 614, und geht auf diese Weise in die Querlenkverfahren ein.

Die für die Messung 306, 406, 506, 606 verwendeten Sensoren 103 des Fahrzeugs 101, 207, 304, 404, 504, 604 können zum Beispiel ein Laserscanner, ein LIDAR oder eine Standbildkamera, oder eine Videokamera sein.

Bezugszeichenliste (Bestandteil der Beschreibung):

101     Sattelschlepper
102     Sattelplatte
103     Sensoren
104     Sattelzapfen

| 105 | Reflektoren |
|---|---|
| 106 | Auflieger |
| 107 | aktive Lenkung |
| 108 | Messung |
| 109 | Stützen |

| 201 | x-Richtung |
|---|---|
| 202 | Querversatz |
| 203 | Orientierungswinkel alpha |
| 204 | Lenkwinkel beta |
| 205 | Sattelzapfen = Koordinatenursprung |
| 206 | Hinterachse |
| 207 | Sattelschlepper |
| 208 | Auflieger |
| 209 | Referenzpunkt |
| 210 | Vorderachse |
| 211 | y-Richtung |
| 212 | Längsachse des Sattelschleppers |

| 300 | Querlenkverfahren |
|---|---|
| 301 | Sollversatzvorgabe |
| 303 | Regelung |
| 304 | Fahrzeug |
| 305 | Messwertefilter |
| 306 | Messvorrichtung |
| 307 | Zielposition |
| 308 | Sollversatz |
| 310 | Solllenkwinkel |
| 311 | aktueller Querversatz |
| 312 | aktuelle Orientierung |
| 313 | Orts- und Orientierungsdaten |
| 315 | Messung |
| 317 | Querlenkvorrichtung |

| 400 | Querlenkverfahren |
|---|---|
| 401 | Sollversatzvorgabe |
| 402 | Querversatzregler |
| 403 | Orientierungsregler |
| 404 | Fahrzeug |
| 405 | Messwertefilter |
| 406 | Messvorrichtung |
| 407 | Zielposition |
| 408 | Sollversatz |
| 409 | Sollorientierung |
| 410 | Solllenkwinkel |
| 411 | aktueller Querversatz |
| 412 | aktuelle Orientierung |
| 413 | Orts- und Orientierungsdaten |
| 415 | Messung |
| 416 | Kaskadenregler |
| 417 | Querlenkvorrichtung |

| 500 | Querlenkverfahren |
|---|---|
| 501 | Sollversatzvorgabe |
| 503 | Regelung |
| 504 | Fahrzeug |
| 505 | Kalmanfilter als Messwertefilter |
| 506 | Messvorrichtung |

507 Zielposition
508 Sollversatz
510 Solllenkwinkel
511 aktueller Querversatz
512 aktuelle Orientierung
513 Orts- und Orientierungsdaten
514 Fahrteigenschaften
515 Messung
517 Querlenkvorrichtung
518 Bewegungsmodell
519 Gütewerte
600 Querlenkverfahren
601 Sollversatzvorgabe
602 Querversatzregler
603 Orientierungsregler
604 Fahrzeug
605 Kalmanfilter als Messwertefilter
606 Messvorrichtung
607 Zielposition
608 Sollversatz
609 Sollorientierung
610 Solllenkwinkel
611 aktueller Querversatz
612 aktuelle Orientierung
613 Orts- und Orientierungsdaten
614 Fahrteigenschaften
615 Messung
616 Kaskadenregler
617 Querlenkvorrichtung
618 Bewegungsmodell
619 Gütewerte

**Patentansprüche**

1. Ein Querlenkverfahren (300, 400, 500, 600) für das Bewegen eines eine aktive Lenkung (107) umfassenden Fahrzeugs (101, 207, 304, 404, 504, 604) in eine Zielposition (104, 205, 307, 407, 507, 607), umfassend:

   - Durchführen von eine Herleitung von Orts- und Orientierungsdaten ermöglichenden Abstands- und/oder Winkelmessungen (108, 315, 415, 515, 615) zwischen dem Fahrzeug (101, 207, 304, 404, 504, 604) und der Zielposition (104, 205, 307, 407, 507, 607),
   - Herleiten der Orts- und Orientierungsdaten (313, 413, 513, 613),
   - Filtern (305,405, 505, 605) der Orts- und Orientierungsdaten (313, 413, 513, 613) zu Aktuellwerten (311, 312, 411, 412, 511, 512, 611, 612), welche aktuelle Ortswerte (311, 411, 511, 611) und aktuelle Orientierungswerte (312, 412, 512, 612) umfassen,
   - Durchführen einer Regelung (303, 402, 403, 503, 602, 603), die aus den Aktuellwerten (311, 312, 411, 412, 511, 512, 611, 612) Solllenkwinkel (310, 410, 510, 610) herleitet, und
   - Realisierung des Solllenkwinkels (310, 410, 510, 610) durch Einwirkung auf die aktive Lenkung (107) des Fahrzeugs (101, 207, 304, 404, 504, 604), wobei
   - das Filtern (305, 405, 505, 605) der Orts- und Orientierungsdaten (313, 413, 513, 613) eine Kalmanfilterung (505, 605) umfasst, bei der die Orts- und Orientierungsdaten (513, 613) unter Berücksichtigung von am Fahrzeug gemessenen Fahrteigenschaften (514, 614), Gütewerten (519, 619) und einem Bewegungsmodell (518, 618) des Fahrzeugs (101, 207, 304, 404, 504, 604) zu den Aktuellwerten (511, 512, 611, 612) aufbereitet werden und wobei die Kalmanfilterung einen Messschritt und einen Updateschritt umfasst, derart dass im Messschritt aus jeweils neuesten Sensordaten und vorherigen berechneten Positionsdaten durch gewichtete Mittelung mit einem Gewicht w das gemäß

$$w = 1 / (q \cdot vm + 1)$$

von der Güte der Sensormessungen q und einer Varianz der Sensormessungen vm abhängt, neue berechnete Positionsdaten hergeleitet werden,
und im Updateschritt die berechneten Positionsdaten gemäß einem mit einem gemessenen Lenkwinkel und einer gemessenen Geschwindigkeit als Fahrteigenschaften (514, 614) parametrierten Bewegungsmodell (518) in aktuelle Positionsdaten extrapoliert werden.

2. Das Querlenkverfahren gemäß Anspruch 1,
**dadurch gekennzeichnet, dass**

- die Regelung (303, 402, 403, 503, 602, 603) eine Kaskadenregelung (416, 616) umfasst, bei der in einem äußeren Regelkreis (402, 602) aus den aktuellen Ortswerten (411, 611) eine Sollorientierung (409, 609) hergeleitet wird, und in einem inneren Regelkreis (403, 603) aus der Sollorientierung (409, 609) und dem aktuellen Orientierungswert (412, 612) der Solllenkwinkel (410, 610) hergeleitet wird.

3. Das Querlenkverfahren gemäß Anspruch 1,
**dadurch gekennzeichnet, dass**
der Messschritt beim Vorliegen der jeweils neuen Sensordaten aktiviert wird, und der Updateschritt beim Vorliegen der jeweils neuen Fahrteigenschaften aktiviert wird.

4. Das Querlenkverfahren gemäß Anspruch 3,
**dadurch gekennzeichnet, dass**
nach dem Messschritt aus jedem alten Gütewert $q_{alt}$, einem zugeordneten Mindestgütewert $q_{min}$ und einem zugeordneten Messgütewert $q_{mess}$ ein neuer Gütewert $q_{neu}$ bestimmt wird gemäß

$$q_{neu} = \max (q_{min}, q_{alt}/(q_{alt}+q_{mess})),$$

wobei $q_{min}$ und $q_{mess}$ separat für Ortsdaten und Orientierungsdaten fest angenommen werden,
und dass nach dem Updateschritt aus jedem alten Gütewert $q_{alt}$, einer zugeordneten Proportionalitätskonstante $C_p$, der Geschwindigkeit v und der Zeit $t_{MS}$ seit dem letzten Messschritt ein neuer Gütewert $q_{neu}$ bestimmt wird gemäß

$$q_{neu} = q_{alt} + C_p \cdot v \cdot t_{MS},$$

wobei $C_p$ separat für Ortsdaten und Orientierungsdaten fest angenommen wird.

5. Eine Querlenkvorrichtung (317, 417, 517, 617) für das Bewegen eines eine aktive Lenkung (107) umfassenden Fahrzeugs (101, 207, 304, 404, 504, 604) in eine Zielposition (104, 205, 307, 407, 507, 607), umfassend:

- Sensoren (103) und Markierungen (105), die so beschaffen und auf das Fahrzeug (101, 207, 304, 404, 504, 604) und die Zielposition (104, 205, 307, 407, 507, 607) verteilt sind, dass aus Abstands- und/oder Winkelmessungen (108, 315, 415, 515, 615) zwischen dem Fahrzeug (101, 207, 304, 404, 504, 604) und der Zielposition (104, 205, 307, 407, 507, 607) Orts- und Orientierungsdaten (313, 413, 513, 613) hergeleitet werden können,
- eine Messvorrichtung (306, 406, 506, 606), die so eingerichtet ist, dass sie mittels der Sensoren (103) und Markierungen (105) die Abstands- und/oder Winkelmessungen (315, 415, 515, 615) zwischen dem Fahrzeug (101, 207, 304, 404, 504, 604) und der Zielposition (104, 205, 307, 407, 507, 607) durchführt, und daraus Orts- und Orientierungsdaten (313, 413, 513, 613) des Fahrzeugs (101, 207, 304, 404, 504, 604) herleitet,
- ein Messwertefilter (305, 405, 505, 605), das so eingerichtet ist, dass es aus den Orts- und Orientierungsdaten (313, 413, 513, 613) Aktuellwerte (311, 312, 411, 412, 511, 512, 611, 612) herleitet, welche aktuelle Ortswerte (311, 411, 511, 611) und aktuelle Orientierungswerte (312, 412, 512, 612) umfassen, und
- einen Regler (303, 402, 403, 503, 602, 603), der so eingerichtet ist, dass aus den Aktuellwerten (311, 312, 411, 412, 511, 512, 611, 612) Solllenkwinkel (310, 410, 510, 610) hergeleitet und durch Einwirkung auf die aktive Lenkung (107) realisiert werden, **dadurch gekennzeichnet, dass**
- das Messwertefilter (305, 405, 505, 605) als Kalmanfilter (505, 605) ausgebildet ist, so eingerichtet, dass die Orts- und Orientierungsdaten (513, 613) unter Berücksichtigung von am Fahrzeug gemessenen Fahrteigenschaften (514, 614), Gütewerten (519, 619) und einem Bewegungsmodell (518, 618) des Fahrzeugs (101, 207, 304, 404, 504, 604) zu den Aktuellwerten (511, 512, 611, 612) aufbereitet werden und wobei

das Kalmanfilter eingerichtet ist, einen Messschritt und einen Updateschritt durchzuführen, derart dass im Messschritt aus jeweils neuesten Sensordaten und vorherigen berechneten Positionsdaten durch gewichtete Mittelung mit einem Gewicht w das gemäß w = 1 / (q·vm + 1) von der Güte der Sensormessungen q und einer Varianz der Sensormessungen vm abhängt, neue berechnete Positionsdaten hergeleitet werden, und im Updateschritt die berechneten Positionsdaten gemäß einem mit einem gemessenen Lenkwinkel und einer gemessenen Geschwindigkeit als Fahreigenschaften (514, 614) parametrierten Bewegungsmodell (518) in aktuelle Positionsdaten extrapoliert werden.

6. Die Querlenkvorrichtung (417, 617) gemäß Anspruch 5,
**dadurch gekennzeichnet, dass**
der Regler (303, 402, 403, 503, 602, 603) als Kaskadenregler (416, 616) mit einem Querversatzregler (402, 602) eingerichtet um aus den aktuellen Ortswerten (411, 611) eine Sollorientierung (409, 609) herzuleiten, und einem Orientierungsregler (403, 603) eingerichtet um aus der Sollorientierung (409, 609) und dem aktuellen Orientierungswert (412, 612) den Solllenkwinkel (410, 610) herzuleiten, ausgebildet ist.

7. Die Querlenkvorrichtung (417, 617) gemäß Anspruch 5,
**dadurch gekennzeichnet, dass**
das Kalmanfilter eingerichtet ist, den Messschritt beim Vorliegen der jeweils neuen Sensordaten zu aktivieren, und den Updateschritt beim Vorliegen der jeweils neuen Fahreigenschaften zu aktivieren.

8. Die Querlenkvorrichtung (417, 617) gemäß Anspruch 7,
**dadurch gekennzeichnet, dass**
das Kalmanfilter eingerichtet ist, nach dem Messschritt aus jedem alten Gütewert $q_{alt}$, einem zugeordneten Mindestgütewert $q_{min}$ und einem zugeordneten Messgütewert $q_{mess}$ einen neuen Gütewert $q_{neu}$ zu bestimmen gemäß

$$q_{neu} = \max \left(q_{min}, q_{alt}/(q_{alt}+q_{mess})\right),$$

wobei $q_{min}$ und $q_{mess}$ separat für Ortsdaten und Orientierungsdaten fest angenommen sind, und nach dem Updateschritt aus jedem alten Gütewert $q_{alt}$, einer zugeordneten Proportionalitätskonstante $C_p$, der Geschwindigkeit v und der Zeit $t_{MS}$ seit dem letzten Messschritt einen neuen Gütewert $q_{neu}$ zu bestimmen gemäß

$$q_{neu} = q_{alt} + C_p \cdot v \cdot t_{MS},$$

wobei $C_p$ separat für Ortsdaten und Orientierungsdaten fest angenommen wird.

9. Ein Fahrzeug (101, 207, 304, 404, 504, 604), insbesondere angetriebenes Zugfahrzeug (101, 207), mit einer aktiven Lenkung (107), **dadurch gekennzeichnet, dass** es eingerichtet ist, ein Querlenkverfahren (300, 400, 500, 600) nach einem der Ansprüche 1 bis 4 durchzuführen, und/oder dass es eine Querlenkvorrichtung (317, 417, 517, 617) nach einem der Ansprüche 5 bis 8 aufweist.

**Claims**

1. A transverse steering method (300, 400, 500, 600) for moving a vehicle (101, 207, 304, 404, 504, 604) comprising an active steering (107) into a target position (104, 205, 307, 407, 507, 607), comprising:

   - performing distance and/or angle measurements (108, 315, 415, 515, 615) between the vehicle (101, 207, 304, 404, 504, 604) and the target position (104, 205, 307, 407, 507, 607) enabling a derivation of location and orientation data,
   - deriving the location and orientation data (313, 413, 513, 613),
   - filtering (305, 405, 505, 605) the location and orientation data (313, 413, 513, 613) to current values (311, 312, 411, 412, 511, 512, 611, 612), which comprise current location values (311, 411, 511, 611) and current orientation values (312, 412, 512, 612),

- performing a control (303, 402, 403, 503, 602, 603), which derives from the current values (311, 312, 411, 412, 511, 512, 611, 612) target steering angle (310, 410, 510, 610), and
- realization of the target steering angle (310, 410, 510, 610) by acting on the active steering (107) of the vehicle (101, 207, 304, 404, 504, 604), wherein
- the filtering (305, 405, 505, 605) of the location and orientation data (313, 413, 513, 613) comprises a Kalman filtering (505, 605), in which the location and orientation data (313, 413, 513, 613) are processed to the current data (511, 512, 611, 612) considering the driving properties (514, 614) measured on the vehicle, quality values (519, 619) and a movement model (518, 618) of the vehicle (101, 207, 304, 404, 504, 604) and wherein the Kalman filtering comprises a measurement step and an update step, such that in the measurement step newly calculated position data are derived from in each case the latest sensor data and previously calculated position data by weighted averaging with a weight w that according to

$$w = 1 / (q \cdot vm + 1),$$

depends on the quality of the sensor measurements q and a variance of the sensor measurements vm, and in the update step the calculated position data are extrapolated to current position data according to a movement model (518) parameterized with a measured steering angle and a measured speed as driving properties (514, 614).

2. The transverse steering method according to claim 1,
   **characterized in that**

   - the control (303, 402, 403, 503, 602, 603) comprises a cascade control (416, 616), in which in an external control circuit (402, 602) a target orientation (409, 609) is derived from the current location values (411, 611), and in an internal control circuit (403, 603) the target steering angle (410, 610) is derived from the target orientation (409, 609) and the current orientation value (412, 612).

3. The transverse steering method according to claim 1,
   **characterized in that**
   the measurement step is activated when there are respective new sensor data, and the update step is activated when there are respective new driving properties.

4. The transverse steering method according to claim 3,
   **characterized in that**
   after the measurement step a new quality value $q_{neu}$ is determined from each old quality value $q_{alt}$, an assigned minimum quality value $q_{min}$ and an assigned measurement quality value $q_{mess}$ according to

$$q_{neu} = \max (q_{min}, q_{alt} / (q_{alt} + q_{mess})),$$

   where $q_{min}$ and $q_{mess}$ are firmly assumed separately for location data and orientation data, and **in that** after the update step a new quality value $q_{neu}$ is determined from each old quality value $q_{alt}$, an assigned proportionality constant $C_p$, the speed v and the time $t_{MS}$ since the last measurement step according to

$$q_{neu} = q_{alt} + C_p \cdot v \cdot t_{MS},$$

   where $C_p$ is firmly assumed separately for location data and orientation data.

5. A transverse steering device (317, 417, 517, 617) for the movement of a vehicle (101, 207, 304, 404, 504, 604) comprising an active steering (107) to a target position (104, 205, 307, 407, 507, 607), comprising:

   - sensors (103) and markings (105), which are acquired and distributed to the vehicle (101, 207, 304, 404, 504, 604) and the target position (104, 205, 307, 407, 507, 607), such that location and orientation data (313, 413, 513, 613) can be derived from distance and or angle measurements (108, 315, 415, 515, 615) between the vehicle (101, 207, 304, 404, 504, 604) and the target position (104, 205, 307, 407, 507, 607),
   - a measurement device (306, 406, 506, 606), which is set up to perform the distance and or angle measurements

12

(315, 415, 515, 615) between the vehicle (101, 207, 304, 404, 504, 604) and the target position (104, 205, 307, 407, 507, 607) by means of the sensors (103) and the markings (105), and derives location and orientation data (313, 413, 513, 613) of the vehicle (101, 207, 304, 404, 504, 604) therefrom,

- a measured value filter (305, 405, 505, 605), which is set up to derive current values (311, 312, 411, 412, 511, 512, 611, 612) from the location and orientation data (313, 413, 513, 613), which comprise current location values (311, 411, 511, 611) and current orientation values (312, 412, 512, 612), and

- a controller (303, 402, 403, 503, 602, 603), which is set up to derive target steering angles (310, 410, 510, 610) and realized by acting on the active steering (107), **characterized in that**

- the measured value filter (305, 405, 505, 605) is embodied as a Kalman filter (505, 605), set up to process the location and orientation data (513, 613) to the current values (511, 512, 611, 612) considering the driving properties (514, 614) measured on the vehicle, quality values (519, 619) and a movement model (518, 618) of the vehicle (101, 207, 304, 404, 504, 604, and wherein

the Kalman filter is set up to perform a measurement step and an update step, such that in the measurement step newly calculated position data are derived from in each case the latest sensor data and previously calculated position data by weighted averaging with a weight w that according to $w = 1 / (q \cdot vm + 1)$ depends on the quality of the sensor measurements q and a variance of the sensor measurements vm,

and in the update step the calculated position data are extrapolated to current position data according to a movement model (518) parameterized with a measured steering angle and a measured speed as driving properties (514, 614).

6. The transverse steering device (417, 617) according to claim 5,
   **characterized in that**
   the controller (303, 402, 403, 503, 602, 603) is embodied as a cascade controller (416, 616) with a transverse offset controller (402, 602) set up in order to derive a target orientation (409, 609) from the current location values (411, 611), and an orientation controller (403, 603) set up in order to derive the target steering angle (410, 610) from the target orientation (409, 609) and the current orientation value (412, 612) .

7. The transverse steering device (417, 617) according to claim 5,
   **characterized in that**
   the Kalman filter is set up to activate the measurement step when there are new sensor data, and to activate the update step when there are new driving properties.

8. The transverse steering device (417, 617) according to claim 7,
   **characterized in that**
   the Kalman filter is set up to determine after the measurement step a new quality value $q_{neu}$ is determined from each old quality value $q_{alt}$, an assigned minimum quality value $q_{min}$ and an assigned measurement quality value $q_{mess}$ according to

$$q_{neu} = \max (q_{min}, q_{alt} / (q_{alt} + q_{mess})),$$

where $q_{min}$ and $q_{mess}$ are firmly assumed separately for location data and orientation data, and **in that** after the update step a new quality value $q_{neu}$ is determined from each old quality value $q_{alt}$, an assigned proportionality constant $C_p$, the speed v and the time $t_{MS}$ since the last measurement step according to

$$q_{neu} = q_{alt} + C_p \cdot v \cdot t_{MS},$$

where $C_p$ is firmly assumed separately for location data and orientation data.

9. A vehicle (101, 207, 304, 504, 604), in particular a driven towing vehicle (101, 207), with an active steering (107), **characterized in that** it is set up to perform a transverse steering method (300, 400, 500, 600) according to any of claims 1 to 4, and/or **in that** it has a transverse steering device (317, 417, 517, 617) according to any of claims 5 to 8.

**Revendications**

1.  Procédé de direction transversale (300, 400, 500, 600) pour le déplacement d'un véhicule (101, 207, 304, 404, 504, 604) qui comprend une direction (107) active jusque dans une position cible (104, 205, 307, 407, 507, 607), qui comprend :

    - l'exécution de mesures de distance et/ou d'angle (108, 315, 415, 515, 615) qui permettent une dérivation de données de lieu et d'orientation entre le véhicule (101, 207, 304, 404, 504, 604) et la position cible (104, 205, 307, 407, 507, 607),
    - la dérivation des données de lieu et d'orientation (313, 413, 513, 613),
    - le filtrage (305, 405, 505, 605) des données de lieu et d'orientation (313, 413, 513, 613) pour obtenir des valeurs actualisées (311, 312, 411, 412, 511, 512, 611, 612), lesquelles comprennent des valeurs de lieu actualisées (311, 411, 511, 611) et des valeurs d'orientation actualisées (312, 412, 512, 612),
    - l'exécution d'une régulation (303, 402, 403, 503, 602, 603) qui dérive des angles de braquage (310, 410, 510, 610) à partir des valeurs actualisées (311, 312, 411, 412, 511, 512, 611, 612), et
    - la réalisation de l'angle de braquage (310, 410, 510, 610) par action sur la direction (107) active du véhicule (101, 207, 304, 404, 504, 604), dans lequel
    - le filtrage (305, 405, 505, 605) des données de lieu et d'orientation (313, 413, 513, 613) comprend un filtrage de Kalman (505, 605) par lequel les données de lieu et d'orientation (513, 613) sont préparées pour obtenir les valeurs actualisées (511, 512, 611, 612) en tenant compte de caractéristiques de roulage (514, 614) mesurées au niveau du véhicule, de valeurs de qualité (519, 619) et d'un modèle de déplacement (518, 618) du véhicule (101, 207, 304, 404, 504, 604), et dans lequel le filtrage de Kalman comprend une étape de mesure et une étape d'actualisation, de sorte que dans l'étape de mesure soient dérivées de nouvelles données de position calculées à partir de données de capteur les plus nouvelles et de données de position calculées précédemment respectives, par moyenne pondérée avec une pondération w qui, conformément à

$$w = 1 / (q \cdot vm + 1),$$

    dépend de la qualité des mesures de capteur q et d'une variance des mesures de capteur vm, et dans l'étape d'actualisation les données de position calculées sont extrapolées pour obtenir des données de position actualisées, conformément à un modèle de déplacement (518) paramétré avec un angle de braquage mesuré et une vitesse mesurée en tant que caractéristiques de roulage (514, 614).

2.  Procédé de direction transversale selon la revendication 1,
    **caractérisé en ce que**

    - la régulation (303, 402, 403, 503, 602, 603) comprend une régulation en cascade (416, 616) par laquelle une orientation de consigne (409, 609) est dérivée dans un circuit de régulation extérieur (402, 602) à partir des valeurs de lieu actualisées (411, 611), et l'angle de braquage de consigne (410, 610) est dérivé dans un circuit de régulation intérieur (403, 603) à partir de l'orientation de consigne (409, 609) et de la valeur d'orientation actualisée (412, 612).

3.  Procédé de direction transversale selon la revendication 1,
    **caractérisé en ce que**
    l'étape de mesure est activée en présence des nouvelles données de capteur respectives, et l'étape d'actualisation est activée en présence des nouvelles caractéristiques de roulage respectives.

4.  Procédé de direction transversale selon la revendication 3,
    **caractérisé en ce que**
    après l'étape de mesure, une nouvelle valeur de qualité $q_{neu}$ est déterminée à partir de chaque ancienne valeur de qualité $q_{alt}$, d'une valeur de qualité minimale $q_{min}$ attribuée et d'une valeur de qualité mesurée $q_{mess}$ attribuée, conformément à

$$q_{neu} = \max (q_{min}, q_{alt} / (q_{alt} + q_{mess})),$$

    dans lequel $q_{min}$ et $q_{mess}$ sont adoptés de façons fixe et séparée pour des données de lieu et des données d'orientation,
et **en ce qu'**après l'étape d'actualisation, une nouvelle valeur de qualité $q_{neu}$ est déterminée à partir de chaque ancienne valeur de qualité $q_{alt}$, d'une constante de proportionnalité $C_p$ attribuée, de la vitesse v et du temps $t_{MS}$ depuis la dernière étape de mesure, conformément à

$$q_{neu} \; = \; q_{alt} \; + \; C_p \cdot v \cdot t_{MS},$$

dans lequel $C_p$ est adopté de façons fixe et séparée pour des données de lieu et des données d'orientation.

5. Dispositif de direction transversale (317, 417, 517, 617) pour le déplacement d'un véhicule (101, 207, 304, 404, 504, 604) qui comprend une direction (107) active jusque dans une position cible (104, 205, 307, 407, 507, 607), qui comprend :

  - des capteurs (103) et des balises (105) qui sont conçus et répartis sur le véhicule (101, 207, 304, 404, 504, 604) et la position cible (104, 205, 307, 407, 507, 607) de sorte que des données de lieu et d'orientation (313, 413, 513, 613) puissent être dérivées à partir de mesures de distance et/ou d'angle (108, 315, 415, 515, 615) entre le véhicule (101, 207, 304, 404, 504, 604) et la position cible (104, 205, 307, 407, 507, 607),
  - un dispositif de mesure (306, 406, 506, 606) qui est configuré de sorte qu'il exécute les mesures de distance et/ou d'angle (315, 415, 515, 615) entre le véhicule (101, 207, 304, 404, 504, 604) et la position cible (104, 205, 307, 407, 507, 607) au moyen des capteurs (103) et des balises (105), et de là dérive des données de lieu et d'orientation (313, 413, 513, 613) du véhicule (101, 207, 304, 404, 504, 604),
  - un filtre de valeurs de mesure (305, 405, 505, 605) qui est configuré de sorte qu'il dérive des valeurs actualisées (311, 312, 411, 412, 511, 512, 611, 612) à partir des données de lieu et d'orientation (313, 413, 513, 613), lesquelles valeurs actualisées comprennent des valeurs de lieu actualisées (311, 411, 511, 611) et des valeurs d'orientation actualisées (312, 412, 512, 612), et
  - un régulateur (303, 402, 403, 503, 602, 603) qui est configuré de sorte que des angles de braquage de consigne (310, 410, 510, 610) soient dérivés à partir des valeurs actualisées (311, 312, 411, 412, 511, 512, 611, 612) et réalisés par action sur la direction (107) active, **caractérisé en ce que**
  - le filtre de valeurs de mesure (305, 405, 505, 605) est conçu en tant que filtre de Kalman (505, 605), configuré de sorte que les données de lieu et d'orientation (513, 613) soient préparées pour obtenir les valeurs actualisées (511, 512, 611, 612) en tenant compte de caractéristiques de roulage (514, 614) mesurées au niveau du véhicule, de valeurs de qualité (519, 619) et d'un modèle de déplacement (518, 618) du véhicule (101, 207, 304, 404, 504, 604), et dans lequel

    le filtre de Kalman est configuré pour exécuter une étape de mesure et une étape d'actualisation, de sorte que dans l'étape de mesure soient dérivées de nouvelles données de position calculées à partir de données de capteur les plus nouvelles et de données de position calculées précédemment respectives, par moyenne pondérée avec une pondération w qui, conformément à w = 1 / (q-vm + 1), dépend de la qualité des mesures de capteur q et d'une variance des mesures de capteur vm,
    et dans l'étape d'actualisation les données de position calculées sont extrapolées pour obtenir des données de position actualisées, conformément à un modèle de déplacement (518) paramétré avec un angle de braquage mesuré et une vitesse mesurée en tant que caractéristiques de roulage (514, 614).

6. Dispositif de direction transversale (417, 617) selon la revendication 5,
   **caractérisé en ce que**
   le régulateur (303, 402, 403, 503, 602, 603) est conçu en tant que régulateur en cascade (416, 616) avec un régulateur de décalage transversal (402, 602) configuré pour dériver une orientation de consigne (409, 609) à partir des valeurs de lieu actualisées (411, 611), et un régulateur d'orientation (403, 603) configuré pour dériver l'angle de braquage de consigne (410, 610) à partir de l'orientation de consigne (409, 609) et de la valeur d'orientation actualisée (412, 612).

7. Dispositif de direction transversale (417, 617) selon la revendication 5,
   **caractérisé en ce que**
   le filtre de Kalman est configuré pour activer l'étape de mesure en présence des nouvelles données de capteur respectives, et activer l'étape d'actualisation en présence des nouvelles caractéristiques de roulage respectives.

8. Dispositif de direction transversale (417, 617) selon la revendication 7,

**caractérisé en ce que**

le filtre de Kalman est configuré pour, après l'étape de mesure, déterminer une nouvelle valeur de qualité $q_{neu}$ à partir de chaque ancienne valeur de qualité $q_{alt}$, d'une valeur de qualité minimale $q_{min}$ attribuée et d'une valeur de qualité mesurée $q_{mess}$ attribuée, conformément à

$$q_{neu} = \max\ (q_{min},\ q_{alt}\ /\ (q_{alt}\ +\ q_{mess})),$$

dans lequel $q_{min}$ et $q_{mess}$ sont adoptés de façons fixe et séparée pour des données de lieu et des données d'orientation,

et après l'étape d'actualisation, déterminer une nouvelle valeur de qualité $q_{neu}$ à partir de chaque ancienne valeur de qualité $q_{alt}$, d'une constante de proportionnalité $C_p$ attribuée, de la vitesse $v$ et du temps $t_{MS}$ depuis la dernière étape de mesure, conformément à

$$q_{neu} = q_{alt} + C_p \cdot v \cdot t_{MS},$$

dans lequel $C_p$ est adopté de façons fixe et séparée pour des données de lieu et des données d'orientation.

9.  Véhicule (101, 207, 304, 404, 504, 604), en particulier véhicule tracteur (101, 207) entraîné, avec une direction (107) active, **caractérisé en ce qu'**il est configuré pour exécuter une procédé de direction transversale (300, 400, 500, 600) selon l'une des revendications 1 à 4, et/ou **en ce qu'**il présente un dispositif de direction (317, 417, 517, 617) selon l'une des revendications 5 à 8.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010004920 A1
- US 2018095103 A1
- DE 102016011366 A1
- DE 102016011324 A1